# NEUE EUROPÄISCHE PATENTSCHRIFT

(11) **EP 2 129 899 B2**
(45) Veröffentlichungstag und Bekanntmachung des Hinweises auf die Entscheidung über den Einspruch: **24.01.2018**
(45) Hinweis auf die Patenterteilung: 18.08.2010
(21) Anmeldenummer: 08734424.8
(22) Anmeldetag: 20.03.2008
(51) Int. Cl.: F02F 3/02, F16J 9/22

(54) **KOLBEN FÜR EINEN VERBRENNUNGSMOTOR**
PISTON FOR AN INTERNAL COMBUSTION ENGINE
PISTON POUR UN MOTEUR À COMBUSTION INTERNE

(30) Priorität: 05.04.2007 DE 102007016945
(43) Veröffentlichungstag der Anmeldung: 09.12.2009
(73) Patentinhaber: Mahle International GmbH, 70376 Stuttgart (DE)
(72) Erfinder: KEMNITZ, Peter, 71397 Leutenbach (DE); GRÖSSLE, Alexander, 74930 Ittlingen (DE)
(74) Vertreter: BRP Renaud & Partner mbB Rechtsanwälte Patentanwälte Steuerberater
(86) Internationale Anmeldenummer: PCT/DE2008/000493
(87) Internationale Veröffentlichungsnummer: WO 2008/122259

(56) Entgegenhaltungen:
- DE-A1- 3 908 810
- DE-A1- 10 011 155
- DE-A1- 10 015 709
- DE-C- 733 931
- FR-A- 988 910

## Beschreibung

Die vorliegende Erfindung betrifft einen Kolben für einen Verbrennungsmotor, mit einem Kolbenkopf aus einer Aluminiumlegierung, der einen Kolbenboden, einen umlaufenden Feuersteg und eine umlaufende Ringpartie mit Ringnuten aufweist, wobei die unmittelbar an den Feuersteg angrenzende Ringnut mit einem alfinierten Ringträger aus einem NiResist-Werkstoff versehen ist.

Kolben für Verbrennungsmotoren sind im Betrieb erheblichen Belastungen ausgesetzt. Insbesondere sind der Kolbenboden, der Feuersteg und der unmittelbar an den Feuersteg angrenzende Kolbenring samt der ihn aufnehmenden Ringnut besonderen mechanischen und thermischen Belastungen ausgesetzt.

Aus diesem Grund wird bevorzugt die an den Feuersteg angrenzende Ringnut häufig mit einem Ringträger versehen. Der Ringträger besteht in der Regel aus einem austenitischen Gusseisen mit Lamellengraphit. Diese Werkstoffe sind auch unter dem Namen NiResist-Werkstoffe bekannt. Ein derartiger Ringträger wird vor dem Gießen eines Kolbens für einen Verbrennungsmotor in die Gießform eingelegt und mit dem Gießwerkstoff umgossen. Bei der Herstellung von Kolben aus einer Aluminiumlegierung muss der Ringträger vorher behandelt werden, damit eine Bindeschicht zwischen den Ringträgermaterialien und dem Kolbenwerkstoff entsteht. Hierzu wird der Ringträger in der Regel alfiniert, bspw. in eine Aluminium-Silizium-Schmelze getaucht, wobei sich eine so genannte Alfin-Schicht, bestehend aus Eisenaluminiden, bildet. Diese Alfinschicht stellt die gewünschte Bindungsschicht zwischen dem Kolbenwerkstoff und den Ringträgermaterialien dar.

Diese Bindungsschicht ist vergleichsweise starr. Bedingt durch die besonderen mechanischen und thermischen Belastungen, die von den bei der Zündung des gasförmigen Brennstoff-Luft-Gemischs entstehenden Verbrennungsgasen ausgehen, besteht daher die Gefahr, dass aufgrund der mechanischen Bewegungen innerhalb des Kolbenkopfs die oben beschriebene Bindungsschicht zwischen dem Kolbenwerkstoff und den Ringträgermaterialien so hoch belastet wird, dass die daraus resultierende Zugspannung innerhalb der Bindungsschicht zum Abreißen derselben führt. Dadurch lockert sich der Ringträger in der Ringnut, was letztendlich zum Motorschaden führt.

Die deutsche Offenlegungsschrift DE 39 08 810 A1 beschreibt einen Kolben für einen Verbrennungsmotor, dessen Kolbenkopf unterhalb der Ringpartie mit zwei vom Mantel des Kolbenschafts nach innen verlaufenden, sich parallel zur Bolzenachsrichtung erstreckenden Sacklöchern versehen ist. Dadurch soll der Kraftfluss in die Breite, das heißt, in die Bereiche links und rechts von den Sacklöchern, geleitet werden.

Problematisch hierbei ist der Umstand, dass durch das Einbringen der Sacklöcher eine mechanische Schwächung des Kolbenkopfs erfolgen kann.

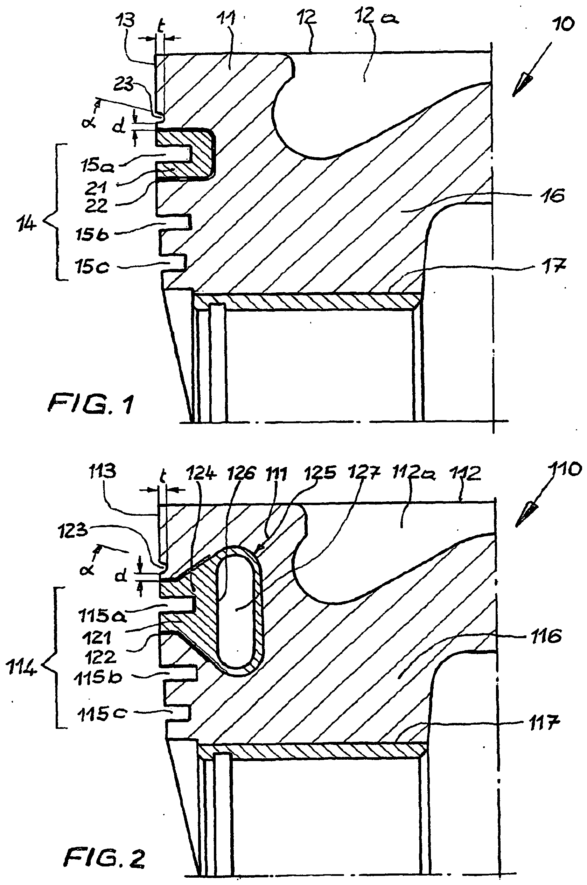

Das U.S.-amerikanische Patent 3,104,594 offenbart einen Kolben aus einem Aluminiumwerkstoff, bei dem die direkt an den Feuersteg angrenzende Ringnut mit einem Ringträger aus einem Gusseisenwerkstoff. Lediglich in Figur 1 ist offenbart, dass oberhalb der mit dem Ringträger versehenen Ringnut zahlreiche Erhebungen ausgebildet sind. Diese Erhebungen werden in der Beschreibung weder erläutert noch bezeichnet. Auch ihr Zweck wird nicht angegeben.

Die Aufgabe der vorliegenden Erfindung besteht somit darin, einen gattungsgemäßen Kolben für einen Verbrennungsmotor so weiterzuentwickeln, dass die Gefahr des Abreißens der Bindungsschicht zwischen Ringträger und Kolbenwerkstoff reduziert wird, ohne dass die Gefahr einer mechanischen Schwächung des Kolbenkopfs besteht.

Die Lösung besteht in einem Kolben mit den Merkmalen des Patentanspruchs 1. Erfindungsgemäß ist vorgesehen, dass oberhalb der Ringpartie eine umlaufende Vertiefung im Feuersteg vorgesehen ist, die im Querschnitt V-förmig ausgebildet ist und einen ausgerundeten Boden aufweist.

Die erfindungsgemäße Ausgestaltung des Kolbens bewirkt, dass die Vertiefung unter der von den Verbrennungsgasen ausgehenden Belastung zusammengedrückt wird. Dadurch werden die beim Zündvorgang wirkenden Kräfte im Wesentlichen vom Kolbenkopf aufgenommen und gelangen nicht mehr oder nur abgeschwächt zum Ringträger, wodurch die Bindungsschicht erheblich entlastet wird. Die erfindungsgemäß vorgesehene Vertiefung stellt also eine Art Entlastungsnut zum Spannungsabbau dar. Sie führt zu einer Reduzierung der Bewegungen innerhalb des Kolbenkopfs, so dass die in der zwischen dem Ringträger und dem Kolbenwerkstoff befindlichen Bindungsschicht auftretenden Zugspannungen erheblich verringert werden. Hierbei hat sich eine im Querschnitt V-förmig mit einem ausgerundeten Boden ausgebildete Vertiefung für das angestrebte Ziel der vorliegenden Erfindung als besonders gut geeignet erwiesen. Die erfindungsgemäß vorgesehene Vertiefung ist darüber hinaus einfach und kostengünstig herzustellen und kann beim Fertigdrehen des Kolbenkopfes problemlos mit eingearbeitet werden.

Vorteilhafte Weiterbildungen ergeben sich aus den Unteransprüchen.

Die Tiefe der erfindungsgemäß vorgesehenen Vertiefung stellt einen Kompromiss zwischen dem angestrebten Spannungsabbau einerseits und einer gewissen Schwächung des Kolbenkopfs andererseits dar. Die Tiefe kann daher je nach den verwendeten Kolbenmaterialien, den Abmessungen des jeweiligen Kolbens sowie den Einsatzbedingungen variieren. Es hat sich herausgestellt, dass eine durchschnittliche Tiefe (t) der erfindungsgemäß vorgesehenen umlaufenden Vertiefung von bis zu 1 mm im Regelfall einen brauchbaren Kompromiss darstellt.

Wenn eine im Querschnitt V-förmig ausgebildete Vertiefung vorliegt, wird ihr Öffnungswinkel (α) ebenfalls von den oben erwähnten Rahmenbedingungen bestimmt. Ein Öffnungswinkel (α) von bis zu 20° hat sich als zweckmäßig herausgestellt.

Es ist sinnvoll, die erfindungsgemäß vorgesehene Vertiefung in einem möglichst geringen Abstand zum Ringträger anzubringen, ohne diesen jedoch zu berühren. Ein Abstand (d) zwischen der umlaufenden Vertiefung und dem Ringträger von mindestens 1 mm ist empfehlenswert.

Besonders zweckmäßig sind Aluminiumlegierungen vom Typ MAHLE M174.

Der Ringträger kann schließlich in an sich bekannter Weise einen Ringträgerteil und einen Kühlkanalteil aufweisen.

Ausführungsbeispiele der Erfindung werden im Folgenden anhand der beigefügten Zeichnungen näher erläutert. Es zeigen in einer schematischen, nicht maßstabsgerechten Darstellung:
- Figur 1: ein erstes Ausführungsbeispiel eines erfindungsgemäßen Kolbens in einer geschnittenen Teildarstellung;
- Figur 2: ein weiteres Ausführungsbeispiel eines erfindungsgemäßen Kolbens in einer geschnittenen Teildarstellung.

Figur 1 zeigt ein erstes Ausführungsbeispiel eines Kolbens 10. Der Kolben 10 kann von beliebiger Bauart sein, sowohl einteilig als auch zweiteilig, bspw. als gebauter Kolben oder Pendelschaftkolben. Der Kolben 10 weist in an sich bekannter Weise einen Kolbenkopf 11 mit einem mit einer Verbrennungsmulde 12a versehenen Kolbenboden 12 sowie einem umlaufenden Feuersteg 13 und einer umlaufenden Ringpartie 14 mit Ringnuten 15a, 15b, 15c auf. Der Kolbenkopf 11 ist ferner in an sich bekannter Weise über Nabenanbindungen 16 mit Naben (nicht dargestellt) verbunden, welche Nabenbohrungen 17 zur Aufnahme eines nicht dargestellten Kolbenbolzens aufweisen. Der Kolben 10 weist ferner in an sich bekannter Weise einen Kolbenschaft mit Laufflächen auf (nicht dargestellt). Zumindest der Kolbenkopf 11 ist im Ausführungsbeispiel aus einer üblichen Aluminiumlegierung, bspw. einer Aluminium-Silizium-Legierung vom Typ MAHLE M174 hergestellt.

Im Ausführungsbeispiel ist unmittelbar unterhalb des Feuerstegs 13 ein Ringträger 21 vorgesehen, in welchen die dem Feuersteg 13 direkt benachbarte Ringnut 15a eingearbeitet ist. Der Ringträger 21 besteht im Ausführungsbeispiel aus einem Ni-Resist-Werkstoff, das heißt, aus einem austenitischen Gusseisenwerkstoff mit Lamellengraphit. Der Ringträger 21 ist alfiniert, also entlang seiner dem Kolbenkopf 11 zugewandten Oberfläche mit einer aus Eisenaluminiden bestehenden sog. Alfinschicht versehen. Die Alfinschicht dient als Bindungsschicht 22 zwischen dem Ringträger 21 und dem Kolbenkopf 11.

Die vergleichsweise starre Bindungsschicht 22 ist während des Betriebs des Verbrennungsmotors hohen Belastungen ausgesetzt, die im Wesentlichen von in der Bindungsschicht 22 selbst auftretenden starken Zugspannungen herrühren. Zur Entlastung der Bindungsschicht 22 ist im Feuersteg 13 eine umlaufende Vertiefung 23 eingearbeitet. Die umlaufende Vertiefung 23 ist im Querschnitt in etwa V-förmig ausgebildet und weist einen ausgerundeten Boden auf. Die umlaufende Vertiefung 23 weist im Ausführungsbeispiel eine Tiefe (t) von etwa 1 mm sowie einen Öffnungswinkel (α) von etwa 20° auf. Der Abstand (d) zwischen der umlaufenden Vertiefung 23 und dem Ringträger 21 beträgt im Ausführungsbeispiel etwa 1 mm.

Bei jedem Zündvorgang des Verbrennungsmotors wird die umlaufende Vertiefung 23 unter der auf den Kolbenboden 12 und den Feuersteg 13 wirkenden Belastung zusammengedrückt. Dadurch werden die beim Zündvorgang wirkenden Kräfte im Wesentlichen vom Kolbenkopf 11 aufgenommen und gelangen nicht mehr oder nur abgeschwächt zum Ringträger 21, wodurch die Bindungsschicht 22 erheblich entlastet wird. Die umlaufende Vertiefung 23 stellt also eine Art Entlastungsnut zum Spannungsabbau im Bereich des Ringträgers 21 dar. Sie führt zu einer Reduzierung der Bewegungen innerhalb des Kolbenkopfs 11, so dass die in der zwischen dem Ringträger 21 und dem Kolbenwerkstoff befindlichen Bindungsschicht 22 auftretenden Zugspannungen erheblich verringert werden. Die umlaufende Vertiefung 23 wird beim an sich bekannten Fertigdrehen des Kolbenkopfes 11 einfach mit eingearbeitet.

Figur 2 zeigt ein weiteres Ausführungsbeispiel eines Kolbens 110. Der Kolben 110 entspricht im Wesentlichen dem in Figur 1 dargestellten Kolben 10. Der Kolben 110 weist ebenfalls einen Kolbenkopf 111 mit einem mit einer Verbrennungsmulde 112a versehenen Kolbenboden 112 sowie einem umlaufenden Feuersteg 113 und einer umlaufenden Ringpartie 114 mit Ringnuten 115a, 115b, 115c auf. Der Kolbenkopf 111 ist ferner in an sich bekannter Weise über Nabenanbindungen 116 mit Naben (nicht dargestellt) verbunden, welche Nabenbohrungen 117 zur Aufnahme eines nicht dargestellten Kolbenbolzens aufweisen. Der Kolben 110 weist ferner in an sich bekannter Weise einen Kolbenschaft mit Laufflächen auf (nicht dargestellt). Auch der Kolbenkopf 111 ist im Ausführungsbeispiel aus einer üblichen Aluminiumlegierung, bspw. einer Aluminium-Silizium-Legierung vom Typ MAHLE M174 hergestellt.

Im Ausführungsbeispiel ist unmittelbar unterhalb des Feuerstegs 113 ein Ringträger 121 vorgesehen. Der Ringträger 121 besteht im Ausführungsbeispiel aus einem Ringträgerteil 124 und einem Kühlkanalteil 125. In den Ringträgerteil 124 ist die dem Feuersteg 113 direkt benachbarte Ringnut 115a eingearbeitet. Der Ringträgerteil 124 und der Kühlkanalteil 125 sind in an sich bekannter Weise miteinander verschweißt (vgl. DE 197 50 012 A1). Die radial zum Kühlkanalteil 125 weisende Fläche 126 des Ringträgerteils 124 und das Kühlkanalteil 125 umschließen einen Kühlkanal 127.

Das Kühlkanalteil 125 besteht in der Regel aus einem Stahlblech, bspw. aus einem V2A-Stahlblech. Der Ringträgerteil 124 besteht im Regelfall aus einem NiResist-Werkstoff, das heißt, aus einem austenitischen Gusseisenwerkstoff mit Lamellengraphit. Der Ringträgerteil 124 ist alfiniert, also entlang seiner dem Kolbenkopf 111 zugewandten Oberfläche mit einer aus Eisenaluminiden bestehenden sog. Alfinschicht versehen. Die Alfinschicht dient als Bindungsschicht 122 zwischen dem Ringträgerteil 124 und dem Kolbenkopf 111.

Zur Entlastung der Bindungsschicht 122 ist im Feuersteg 113 eine umlaufende Vertiefung 123 eingearbeitet. Die umlaufende Vertiefung 123 ist im Querschnitt in etwa V-förmig ausgebildet und weist einen ausgerundeten Boden auf. Die umlaufende Vertiefung 123 weist im Ausführungsbeispiel eine Tiefe (t) von etwa 1 mm sowie einen Öffnungswinkel (α) von etwa 20° auf. Der Abstand (d) zwischen der umlaufenden Vertiefung 123 und dem Ringträgerteil 124 des Ringträgers 121 beträgt im Ausführungsbeispiel etwa 1 mm.

Mit der vorliegenden Erfindung wird ein einfach herzustellender und daher für die Serienproduktion tauglicher Kolben 10, 110 vorgeschlagen, bei dem die Bindungsschicht 22, 122 zwischen Ringträger 21, 121 und Kolbenkopf 11, 111 von Zugspannungen entlastet ist, so dass die Gefahr des Abreißens der Bindungsschicht 22, 122 erheblich reduziert ist.

## Patentansprüche

1. Kolben (10, 110) für einen Verbrennungsmotor, mit einem Kolbenkopf (11, 111) aus einer Aluminiumlegierung, der einen Kolbenboden (12, 112), einen umlaufenden Feuersteg (13, 113) und eine umlaufende Ringpartie (14, 114) mit Ringnuten (15a, 15b, 15c; 115a, 115b, 115c) aufweist, wobei die unmittelbar an den Feuersteg (13, 113) angrenzende Ringnut (15a, 115a) mit einem alfinierten Ringträger (21, 121) aus einem NiResist-Werkstoff versehen ist, **dadurch gekennzeichnet, dass** oberhalb der Ringpartie (14, 114) eine umlaufende Vertiefung (23, 123) im Feuersteg (13, 113) vorgesehen ist, die im Querschnitt V-förmig ausgebildet ist und einen ausgerundeten Boden aufweist.

2. Kolben nach Anspruch 1, **dadurch gekennzeichnet, dass** die umlaufende Vertiefung (23, 123) eine Tiefe (t) von bis zu 1 mm aufweist.

3. Kolben nach einem der vorhergehenden Ansprüche, **dadurch gekennzeichnet, dass** der Öffnungswinkel (α) der im Querschnitt V-förmig ausgebildeten Vertiefung (23, 123) bis zu 20° beträgt.

4. Kolben nach einem der vorhergehenden Ansprüche, **dadurch gekennzeichnet, dass** der Abstand (d) zwischen der umlaufenden Vertiefung (23, 123) und dem Ringträger (21, 121) mindestens 1 mm beträgt.

5. Kolben nach einem der vorhergehenden Ansprüche, **dadurch gekennzeichnet, dass** zumindest der Kolbenkopf (11, 111) aus einer Al-Legierung vom Typ MAHLE M174 hergestellt ist.

6. Kolben nach einem der vorhergehenden Ansprüche, **dadurch gekennzeichnet, dass** der Ringträger (121) einen Ringträgerteil (124) und einen Kühlkanalteil (125) aufweist.

## Claims

1. Piston (10, 110) for a combustion engine, with a piston head (11, 111) consisting of an aluminium alloy and exhibiting a piston top (12, 112), a circular fire land (13, 113) and a circular ring set (14, 114) with ring grooves (15a, 15b, 15c; 115a, 115b, 115c), wherein the ring groove (15a, 115a) directly adjacent to the fire land (13, 113) is supplied with an aluminium finished ring carrier (21, 121) consisting of a Ni-Resist material, **characterized** such that a circular depression (23, 123) is present in the fire land (13, 113) above the ring set (14, 114) which circular depression (23, 123) in the cross section is V-shaped and exhibits a rounded ground.

2. Piston pursuant to claim 1, **characterized** such that the circular depression (23, 123) exhibits a depression (t) of up to 1 mm.

3. Piston pursuant to one of the previous claims, **characterized** such that the angle of aperture (α) in the V-shaped depression (23, 123) in the cross section is up to 20°.

4. Piston pursuant to one of the previous claims, **characterized** such that the distance (d) between the circular depression (23, 123) and the ring carrier (21, 121) is at least 1 mm.

5. Piston pursuant to one of the previous claims, **characterized** such that at least the piston head (11, 111) is manufactured from an Al alloy of the type MAHLE M174 .

6. Piston pursuant to one of the previous claims, **characterized** such that the ring carrier (121) exhibits a ring carrier part (124) and a cooling duct part (125) .

## Revendications

1. Piston (10, 110) pour un moteur à combustion interne, doté d'une tête de piston (11, 111) en alliage d'aluminium, qui comprend un fond de piston (12, 112), un cordon de feu périphérique (13, 113) et une partie annulaire périphérique (14, 114) comportant des gorges annulaires (15a, 15b, 15c ; 115a, 115b, 115c), la gorge annulaire (15a, 115a) directement adjacente au cordon de feu (13, 113) étant munie d'un support de segment (21, 121) ayant subi un processus Al-Fin, fabriqué en un matériau Ni-Resist, **caractérisé en ce qu'**un évidement périphérique (23, 123) est prévu dans le cordon de feu (13, 113) au-dessus de la partie annulaire (14, 114), lequel présente une section en forme de V et un fond arrondi.

2. Piston selon la revendication 1, **caractérisé en ce que** la profondeur (t) de l'évidement périphérique (23, 123) peut atteindre 1 mm.

3. Piston selon l'une quelconque des revendications précédentes, **caractérisé en ce que** l'angle d'ouverture (α) de l'évidement (23, 123) à section en forme de V peut atteindre 20°.

4. Piston selon l'une quelconque des revendications précédentes, **caractérisé en ce que** la distance (d) entre l'évidement périphérique (23, 123) et le support de segment (21, 121) est au moins égale à 1 mm.

5. Piston selon l'une quelconque des revendications précédentes, **caractérisé en ce qu'**au moins la tête de piston (11, 111) est fabriquée en alliage d'aluminium de type MAHLE M174.

6. Piston selon l'une quelconque des revendications précédentes, **caractérisé en ce que** le support de segment (121) comporte une partie support de segment (124) et une partie à canal de refroidissement (125).
